# EUROPÄISCHE PATENTANMELDUNG

(11) **EP 1 063 442 A2**
(43) Veröffentlichungstag der Anmeldung: **27.12.2000**
(21) Anmeldenummer: 00113240.6
(22) Anmeldetag: 21.06.2000
(51) Int. Cl.: F16D 65/12

(54) **Bremsscheibe für eine Scheibenbremse**

(30) Priorität: 23.06.1999 DE 19928747
(71) Anmelder: Continental Teves AG & Co. oHG, 60488 Frankfurt (DE)
(72) Erfinder: Veith, Christoph, 61476 Kronberg (DE); Beer, Wilhelm, 65428 Rüsselsheim (DE); Gehrig, Horst, 65719 Hofheim/Ts. (DE)

(57) **Zusammenfassung**

Die vorliegende Erfindung betrifft eine Bremsscheibe 1 mit einem gegossenen Reibring 2. Zur Verbesserung der Kühlungseigenschaften des Reibringes 2 besitzt dieser an seinen Reibflächen 4,5 eingegossene axiale Vertiefungen 6,7 sowie zumindest eine radiale Ausnehmung 15,16 in wenigstens einer seiner Umfangsflächen 13,14. Dabei erstreckt sich die radiale Ausnehmung 15,16 in mindestens eine axiale Vertiefung 6,7, wodurch die Ausnehmung 15,16 und die Vertiefungen 16,17 strömungsverbunden sind. Insgesamt wird somit eine Kühlluftströmung durch den Reibring 2 ermöglicht. Besonders vorteilhaft lassen sich die radialen Ausnehmungen 15,16 nach dem Gießen des Reibringes 2 mechanisch in die jeweiligen Umfangsfläche 13,14 einarbeiten.

## Beschreibung

Die vorliegende Erfindung bezieht sich auf eine Bremscheibe für Scheibenbremsen, wie sie insbesondere bei Kraftfahrzeugen zum Einsatz kommt.

Derartige Bremsscheiben sind in zahlreichen Ausführungsvarianten bekannt und werden aus Kostengrunden häufig in einem Gießverfahren hergestellt. Dabei kommt der Bremsscheibe im Betrieb unter anderem die allgemeine Aufgabe zu, die beim Bremsvorgang entstehende Reibungswärme aufzunehmen und möglichst rasch abzuleiten.

So ist es aus der Patentschrift DE 22 19 770 C2 bekannt eine belüftete Bremsscheibe mittels Gießens herzustellen, die zusätzlich zu radialen Kühlkanälen noch axial verlaufende Kühlluftöffnungen aufweist. Damit soll eine verbesserte Kühlung gegenüber Bremsscheiben mit massiven Reibringen, d. h. ohne innere Belüftung erreicht werden. Sowohl die radialen Kühlkanäle als auch die axialen Kühlluftöffnungen werden dabei durch einen speziell gestalteten Formkern während des Gießens in die Bremsscheibe eingeformt. Ein solcher Formkern besitzt eine aufwendige Formgebung und ist daher nur recht kostenintensiv herzustellen sowie anfällig für Beschädigungen. Weiterhin erweist es sich für die genannte Anordnung als nachteilig, daß der filigran gestaltete Formkern positionsgenau innerhalb des Formkastens für die Bremsscheibe angeordnet werden muß. Es ergibt sich somit ein unerwünscht hoher Fertigungsaufwand für die Bremsscheibenherstellung.

Darüber hinaus geht aus der EP 0 670 434 A1 eine gattungsgemäße Bremsscheibe hervor, die auf ihren Reibflächen eingegossene Vertiefungen zur Bestimmung des Verschleißzustandes der Bremsscheibe aufweist. Eine derartige Bremsscheibe besitzt jedoch unzureichende Kühlungseigenschaften, so daß es zu unerwünschten Überhitzungen des Reibringes während des Bremsenbetriebes kommen kann.

Ausgehend vom letztgenannten Stand der Technik, besteht somit die Aufgabe der Erfindung darin, eine Bremsscheibe mit gegossenem Reibring anzugeben, die gegenüber bekannten massiven Bremsscheiben verbesserte Kühlungseigenschaften aufweist und kostengünstig herstellbar ist.

Gelöst wird die Aufgabe durch eine Bremsscheibe mit den Merkmalen des Patentanspruches 1. Danach umfaßt die Bremsscheibe einen gegossenen Reibring mit einander gegenüberliegenden Reibflächen, die zur Anlage von Bremsklötzen einer Scheibenbremse dienen. Innerhalb zumindest einer Reibfläche sind bezogen auf die Bremsscheibenachse eingegossene, axiale Vertiefungen vorgesehen, von denen sich mindestens eine in eine radiale Ausnehmung einer der radialen Umfangsflächen des Reibringes erstreckt. Somit wird eine Strömungsverbindung zwischen den axialen Vertiefungen und der radialen Ausnehmung geschaffen. Durch eine derartige Verbindung der Vertiefungen mit der Ausnehmung wird also eine verbesserte Kühlluftströmung durch den Reibring bewirkt. Eine zusätzliche Verstärkung der Kühlluftströmung durch den Reibring läßt sich dadurch erreichen, daß man sowohl an der radial inneren als auch an der radial äußeren Umfangsflächen des Reibringes eine in die axialen Vertiefungen mündende Ausnehmung vorsieht.

Gemäß einer vorteilhaften Variante ist die Ausnehmung im Reibring als um die Bremsscheibenachse umlaufende radiale Nut ausgebildet. Die radiale Nuttiefe ist dabei derart bemessen, daß die Nut mehrere über die Reibfläche bzw. die Reibflächen verteilte Vertiefungen überschneidet und dadurch mit diesen strömungsverbunden ist. Andererseits wird durch die radiale Nut die Gesamtfestigkeit des Reibringes nicht übermäßig reduziert. Insgesamt wird somit eine Luftströmung durch die Nut und die in diese mündenden Vertiefungen erzeugt, die den Reibring über den gesamten Umfang gleichmäßig kühlt.

In einer bevorzugten Ausführungsform werden die Vertiefungen durch entsprechend gestaltete Vorsprünge des zugehörigen Formkastens während des Gießens des Reibringes abgebildet. Die Verwendung eines Formkastens mit derartigen Vorsprüngen erlaubt somit das unmittelbare Gießen eines gattungsgemäßen Reibringes mit Vertiefungen ohne innerhalb des Formkastens noch einen zusätzlichen Formkern verwenden zu müssen. Die einzelnen Vertiefungen sind dabei vorteilhaft gleichmäßig über dem Reibringumfang verteilt auf den jeweiligen Reibflächen angeordnet. Besonders günstig erweist sich die Anordnung der Vertiefungen in Abhängigkeit von der Hauptdrehrichtung der Bremsscheibe auf einer bogenförmigen Linie zwischen dem radial inneren und dem radial äußeren Rand der Reibfläche. Die Formgebung der Vertiefungen läßt sich durch Modifizierung der Vorsprünge im Formkasten nahezu beliebig beeinflussen. So können die Vertiefungen beispielsweise rotationssymmetrisch bezogen auf die Achsrichtung oder aber bewußt nicht-konzentrisch zur Achsrichtung gestaltet werden.

Eine vorteilhafte Weiterbildung des Erfindungsgedankens sieht vor, daß jede der gegenüberliegenden Reibflächen Vertiefungen aufweist, wobei die Vertiefungen der ersten Reibfläche zu den Vertiefungen der zweiten Reibfläche versetzt angeordnet sind. Dadurch wird eine gleichmäßige Kühlung des Reibringes gewährleistet ohne den Reibring hinsichtlich seiner Festigkeit übermäßig zu schwächen.

Besonders günstig läßt sich die Erfindung anwenden bei einstückig gegossenen Bremsscheiben, bei denen der Reibring zusammen mit einem im wesentlichen topfförmigen Halteteil als ein einziges Bauteil gegossen wird. Eine zusätzliche Vereinfachung des Formkastens ergibt sich, wenn die Ausnehmung in einer Umfangsfläche bzw. beiden Umfangsflächen nach dem Gießen mechanisch eingearbeitet wird. Auf diesem Wege kann eine gegossene Bremsscheibe mit einem belüfteten Reibring durch geringen Fertigungsaufwand realisiert werden, indem während des Gießprozesses kein zusätzlicher Formkern verwendet werden muß.

Einige Ausführungsbeispiele der Erfindung werden anhand der Zeichnung dargestellt und im folgenden näher erläutert.

Es zeigt
- Fig. 1: drei teilweise geschnittene Ansichten einer einteilig gegossenen Bremsscheibe mit axialen Vertiefungen sowie radialer Ausnehmung,
- Fig. 2: drei Ausführungsbeispiele von symmetrischen Vertiefungen in der Reibfläche in teilweise geschnittener Darstellung,
- Fig. 3: drei Ausführungsbeispiele von asymmetrischen Vertiefungen in der Reibfläche in teilweise geschnittener Darstellung.

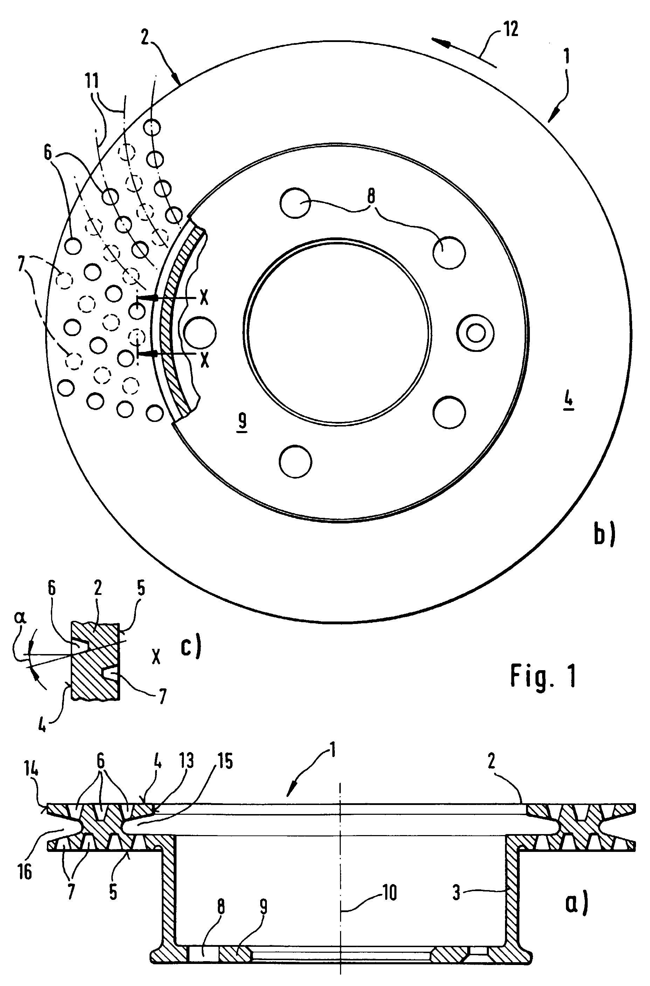

Die in den Figuren dargestellte Bremsscheibe 1 umfaßt einen Reibring 2 sowie ein damit verbundenes topfförmiges Halteteil 3. Gemäß Figur 1 ist der Reibring 2 einteilig mit dem Halteteil 3 verbunden. Vorzugsweise wird die Bremsscheibe 1 dabei durch einen Gießprozeß hergestellt. Grundsätzlich kann der Reibring 2 im Sinne der Erfindung jedoch auch auf andere Art und Weise am Halteteil 3 befestigt sein, beispielsweise lösbar. Mittels des Halteteiles 3 ist die Bremsscheibe 1 über Befestigungsöffnungen 8 in einem Flanschabschnitt 9 an einem nicht gezeigten Fahrzeugrad drehfest befestigt.

Der Reibring 2 besitzt zwei einander gegenüberliegende Reibflächen 4,5, die zur Anlage nicht gezeigter Bremsklötze einer Scheibenbremse vorgesehen sind. Zur Verbesserung der Kühlungseigenschaften des Reibringes 2 sind die Reibflächen 4,5 mit gleichmäßig über den Reibringumfang verteilten, axialen Vertiefungen 6,7 versehen, die in erster Linie einer guten Belüftung des Reibringes 2 dienen. Die Vertiefungen 6,7 werden besonders einfach während des Gießens des Reibringes 2 in die Reibflächen 4,5 eingeformt, wodei jede Vertiefung durch einen entsprechend gestalteten Vorsprung eines (nicht gezeigten) zugehörigen Formkastens beim Gießen abgebildet wird. Durch das Abbilden der Vertiefungen 6,7 durch Vorsprünge im Formkasten kann ein zusätzlicher Formkern vorteilhaft entfallen, was den eigentlichen Gießvorgang des Reibringes 2 erheblich vereinfacht.

Die einzelnen Vertiefungen 6,7 können insbesondere rotationssymmetrisch (siehe Fig. 1-2) zu einer parallel zur Bremsscheibenachse 10 verlaufenden Achse ausgebildet sein. Dabei ergibt sich eine im wesentlichen kegelförmige Kontur für die Vertiefungen 6,7 mit einem Öffnungswinkel α gegenüber der Achsrichtung der Bremsscheibe. Die damit gegenüber der Achsrichtung um den Öffnungswinkel α geneigten Seitenwände der Vertiefung 6,7 können somit im Verlaufe des Gießprozesses vorteilhaft als Ausformschrägen genutzt werden. Außerdem ergibt sich durch den Öffnungswinkel α der Vertiefungen ein geringer Reibbelabverschleiß im Bremssenbetrieb. Weiterhin sind jeweils mehrere Vertiefungen 6,7 bevorzugt entlang bogenförmiger Linien 11 aneinandergereiht, wobei der Verlauf der bogenförmigen Linie in Abhängigkeit von der Hauptdrehrichtung 12 der Bremsscheibe 1 gestaltet werden kann. Zur Steigerung der Kühlwirkung sind in beiden Reibflächen 4,5 Vertiefungen ausgebildet, wobei bevorzugt die Vertiefungen 6 der ersten Reibfläche 4 gegenüber den Vertiefungen 7 der zweiten Reibfläche 5 versetzt angeordnet sind. Dadurch wird eine gleichmäßige Kühlung des gesamten Reibringes 2 gewährleistet ohne diesen durch die beidseitigen Vertiefungen 6,7 in seiner Festigkeit übermäßig zu schwächen.

Zur zusätzlichen Verbesserung der Kühlungseigenschaften des Reibringes 2 sind sowohl an der radial inneren 13 als auch an der radial äßeren Umfangsfläche 14 im wesentlichen radial verlaufende Ausnehmungen 15,16 ausgebildet, wobei erfindungsgemäß auch nur eine der beiden Ausnehmungen 15,16 vorgesehen sein kann. Die Ausnehmungen 15,16 sind bevorzugt als umlaufende Nuten ausgebildet. Sie können jedoch ebenfalls als mehrere, gleichmäßig über den Reibringumfang verteilte Ausnehmungen ausgebildet sein. Jede der Ausnehmungen 15,16 ist dabei durch einen mechanischen Bearbeitungsschritt in die jeweilige Umfangsfläche 13,14 eingearbeitet, vorzugsweise durch eine Drehoperation. Die radiale Tiefe der Ausnehmungen 15,16 ist derart gewählt, daß sich jede Ausnehmung 15,16 in zumindest eine, insbesondere in mehrere der axialen Vertiefungen 6,7 erstreckt. Dadurch sind die Vertiefungen 6,7 und die Ausnehmungen 15,16 miteinander strömungsverbunden. Es ergibt sich also eine Kühlluftströmung durch den Reibring 2, die durch die Vertiefungen 6,7 und die Ausnehmungen 15,16 verläuft. Damit kann der gesamte Reibring gleichmäßig gekühlt werden und sicher vor einer Überhitzung geschützt werden. Insgesamt wird durch das mechanische Einarbeiten der radialen Ausnehmungen 15,16 eine Bremsscheibe 1 mit gegeossenem Reibring 2 geschaffen, wobei der Reibring 2 durchgehend belüftet wird, ohne beim Gießen einen zusätzliche Formkern verwenden zu müssen. Die beschriebene Bremsscheibe 1 ist damit besonders günstig herzustellen.

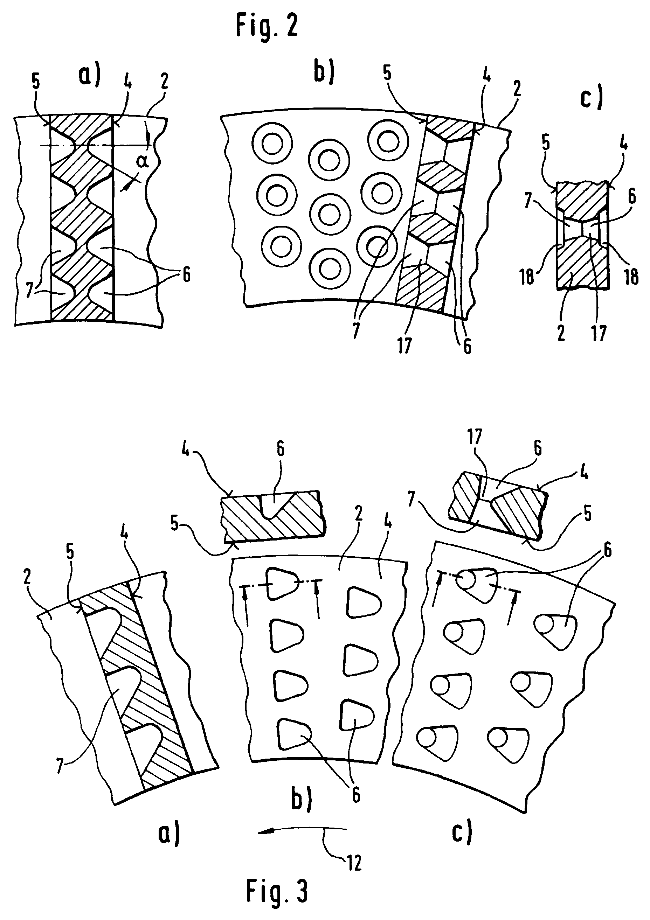

Figur 2a-c verdeutlicht drei weitere Ausführungsbeispiele von rotationssymmetrischen Vertiefungen 6,7 im Reibring 2, wobei die Vertiefungen 7 der zweiten Reibfläche 5 gegenüberliegend zu den Vertiefungen 6 der ersten Reibfläche 4 angeordnet sind. Daraus eröffnet sich die Möglichkeit, die axiale Tiefe der Vertiefungen 6,7 derart zu wählen, daß die jeweils gegenüberliegenden Vertiefungen 6,7 ineinander übergehen und somit den Reibring 2 durchdringende Belüftungsöffnungen 17 ausbilden (siehe Figur 2b-c). Durch diese Maßnahme wird die Kühlluftströmung durch den Reibring 2 verstärkt.

Gemäß einer Weiterbildung nach Figur 2c sind zumindest einige der über die Reibflächen 4,5 verteilten Vertiefungen 6,7 gestuft ausgebildet, wobei sich für eine derartige Vertiefung 6,7 ein Absatz 18 ergibt. Infolge des Absatzes 18 weist die Vertiefung 6,7 unmittelbar an der Reibfläche 4,5 einen größeren Durchmesser auf als im Reibringinneren. Demnach kann der Absatz 18 als einfache optische Verschleißmarke des Reibringes 2 genutzt werden, indem die axiale Tiefe des Absatzes 18 anhand des maximal zulässigen Reibringverschleißmaßes festgelegt wird. Ist der Reibring in diesem Fall derart verschlissen, daß der Absatz 18 nicht mehr sichtbar ist, so ist die minimale Reibringdicke erreicht und die Bremsscheibe muß ausgetauscht werden.

In Figur 3a-c sind drei Ausführungsbeispiele von nicht-konzentrischen Vertiefungen 6,7 dargestellt. Solche nicht-konzentrischen Vertiefungen 6,7 können sowohl bezogen auf die radiale (siehe Fig. 3a) als auch bezogen auf die Hauptdrehrichtung 12 der Bremsscheibe (siehe Fig. 3b-c) asymmetrisch ausgebildet sein. Weiterhin sind die Vertiefungen 6,7 je nach Anwendungsfall entweder nur auf einer Reibfläche 4,5 oder aber auf beiden Reibflächen 4,5 angeordnet. Es ergibt sich gemäß Figur 3c auch die Möglichkeit oben beschriebene, durchgehende Belüftungsöffnungen 17 auszubilden.

Für den Fall der Verwendung asymmetrischer Vertiefungen 6,7 bezogen auf die Hauptdrehrichtung 12 der Bremsscheibe (siehe Fig. 3b-c) läßt der durchschnittliche Verschleiß sowohl des Reibringes 2 als auch der daran anliegenden Bremsklötze während des Bremsenbetriebes reduzieren.

Allgemein ist der Erfindungsgedanke nicht auf die in den Figuren gezeigten Ausführungsbeispiele beschränkt. Es sind selbstverständlich auch andere Anordnungen denkbar, die die Kühlungseigenschaften eines gegossenen Reibringes mit Vertiefungen in der Reibfläche im Sinne der Erfindung verbessern.

## Patentansprüche

1. Bremssscheibe (1) für eine Scheibenbremse mit einem gegossenen Reibring (2), der einander gegenüberliegende Reibflächen (4,5) zur Anlage von Bremsklötzen umfaßt, wobei mindestens eine Reibfläche (4,5) eingegossene, axiale Vertiefungen (6,7) aufweist, dadurch **gekennzeichnet,** daß der Reibring (2) an zumindest einer seiner radialen Umfangflächen (13,14) wenigstens eine Ausnehmung (15,16) aufweist, die in mindestens eine Vertiefung (6,7) der Reibfläche (4,5) mündet.

2. Bremsscheibe (1) nach Anspruch 1, dadurch **gekennzeichnet,** daß der Reibring (2) sowohl an seiner radial inneren als auch an seiner radial äußeren Umfangfläche (13,14) wenigstens eine Ausnehmung (15,16) aufweist.

3. Bremsscheibe (1) nach einem der vorhergehenden Ansprüche, dadurch **gekennzeichnet,** daß die Ausnehmung (15,16) als um die Bremsscheibenachse (10) umlaufende radiale Nut ausgebildet ist.

4. Bremsscheibe (1) nach einem der vorhergehenden Ansprüche, dadurch **gekennzeichnet,** daß die Vertiefungen (6,7) in der Reibfläche (4,5) durch entsprechend gestaltete Vorsprünge in einem zugehörigen Formkasten während des Gießens des Reibringes (2) abgebildet sind.

5. Bremsscheibe (1) nach einem der vorhergehenden Ansprüche, dadurch **gekennzeichnet,** daß jede der gegenüberliegenden Reibflächen (4,5) Vertiefungen (6,7) aufweist und die Vertiefungen (6) der ersten Reibfläche (4) zu den Vertiefungen (7) der zweiten Reibfläche (5) versetzt angeordnet sind.

6. Bremsscheibe (1) nach einem der vorhergehenden Ansprüche, dadurch **gekennzeichnet,** daß der Reibring (2) einstückig mit einem topfförmigen Halteteil (3) verbunden ist.

7. Bremsscheibe (1) nach einem der vorhergehenden Ansprüche, dadurch **gekennzeichnet,** daß die Ausnehmung (15,16) in der Umfangsfläche (13,14) mechanisch eingearbeitet ist.
